(19) Europäisches Patentamt
European Patent Office
Office européen des brevets

(11) EP 2 823 169 B1

(12) EUROPEAN PATENT SPECIFICATION

(45) Date of publication and mention
of the grant of the patent:
**20.02.2019 Bulletin 2019/08**

(51) Int Cl.:
*F02C 7/12* (2006.01)     *F02C 7/20* (2006.01)

(21) Application number: **13707415.9**

(22) Date of filing: **06.03.2013**

(86) International application number:
**PCT/EP2013/054528**

(87) International publication number:
**WO 2013/131970 (12.09.2013 Gazette 2013/37)**

(54) **GAS TURBINE WITH PRIMARY AND SECONDARY LUBRICATING OIL COOLER**

GASTURBINE MIT EINEM PRIMÄREN UND EINEM SEKUNDÄREN SCHMIERÖLKÜHLER

TURBINE À GAZ À REFROIDISSEUR D'HUILE DE LUBRIFICATION PRIMAIRE ET SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2012 IT FI20120047**

(43) Date of publication of application:
**14.01.2015 Bulletin 2015/03**

(73) Proprietor: **Nuovo Pignone S.r.l.
50127 Florence (IT)**

(72) Inventors:
• **BEI, Simone
50100 Florence (IT)**
• **VITI, Filippo
50100 Florence (IT)**
• **LAZZERI, Marco
50100 Florence (IT)**

• **MERLO, Roberto
50100 Florence (IT)**
• **MARCUCCI, Daniele
50100 Florence (IT)**

(74) Representative: **Illingworth-Law, William
Illingworth
GPO Europe
GE International Inc.
The Ark
201 Talgarth Road
Hammersmith
London W6 8BJ (GB)**

(56) References cited:
**US-A- 3 080 716       US-A- 3 418 485
US-A- 3 976 165       US-A- 4 773 212
US-A1- 2005 160 740**

## Description

The present disclosure relates to gas turbines, particularly aeroderivative gas turbines. More specifically, the present disclosure relates to improvements in the lubricating oil circuit and lubricating-oil heat exchangers for gas turbines.

US 3 418 485 A discloses a housing for a gas turbine engine.

Lubricating oil, or lube oil, is specifically used in gas turbines to lubricate and cool bearings, which support the rotary shafts of the gas turbine. A gas turbine may include one or more rotary shafts, depending upon the structure and design of the gas turbine.

In some known gas turbines the lubricating oil is also used to vary the geometry of the stationary or rotary vanes and blades of the gas turbine, e.g. to adapt the geometry to specific operating conditions. The lubricating oil circuit will in this case provide not only the lubricating oil to the bearings, but also to a hydraulic system comprising hydraulic actuators for controlling the geometry of the turbomachine.

This results in a large amount of heat being transferred to the lubricating oil. It becomes necessary removing heat from the lubricating oil, in order to maintain the lubricating oil and therefore the mechanical components, through which the lubricating oil circulates, at acceptable temperatures.

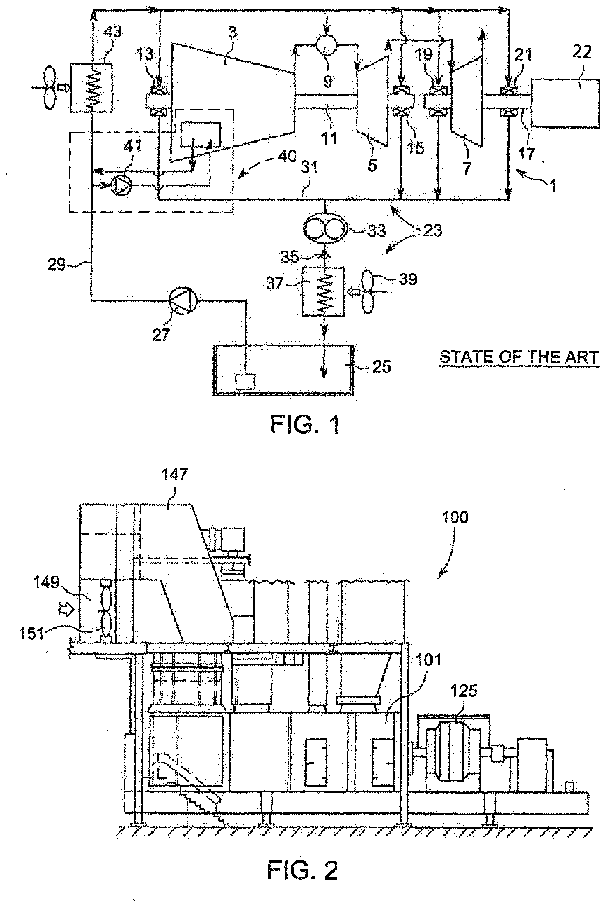

Fig.1 shows schematically a gas turbine with a lubricating oil circulating system. The gas turbine is indicated with reference number 1 as a whole. In the embodiment shown in Fig. 1, the gas turbine comprises a compressor 3, a high pressure turbine 5, a power turbine 7, also named low pressure turbine, and a combustor 9. The gas turbine is housed in a turbine package, not shown in the schematic of Fig. 1. The rotor of compressor 3 and the rotor of the high pressure turbine 5 are torsionally connected to a common shaft 11. The common shaft 11 is supported by bearings 13 and 15 in the machine casing. The compressor 3 and the high pressure turbine 5 rotate at the same rotary speed. The rotor of the power turbine 7 is torsionally connected to a rotary shaft 17, which is supported by bearings 19 and 21 in the machine casing.

The air compressed by the compressor 3 enters the combustor 9, where the compressed air is mixed with a gaseous or liquid fuel. The fuel is ignited and high pressure, high temperature, combustion gases are produced. The combustion gases are expanded in the high pressure turbine 5 to generate power for driving the compressor 3 through shaft 11. The partially expanded combustion gases are then further expanded in the power turbine 7. The power generated by further expansion in the power turbine is used to drive a load, for example a compressor or compressor train, an electric generator, or the like. In the schematic representation of Fig. 1 the load is generically labeled 22.

Lubricating oil is circulated through the bearings 13, 15, 19 and 21 to lubricate the bearings and remove heat therefrom. A lubricating oil circuit 23 is provided for that purpose. The lubricating oil circuit comprises a lubricating oil tank 25, from which the lubricating oil is aspirated through a lubricating oil pump 27, which feeds the lubricating oil through a lubricating oil pipe 29. The lubricating oil is then distributed to the bearings of the gas turbine 1. The lubricating oil from the bearings 13, 15, 19 and 21 is collected in a collecting duct 31 and is returned to the lubricating oil tank 25 through a scavenger pump 33, downstream whereof a check valve 35 is provided. The scavenger pump 33 maintains the bearings 13, 15, 19 and 21 under slight underpressure to avoid lubricating oil escaping the bearings and flooding the gas turbine 1. Between the scavenger pump 33 and the lubricating oil tank 25 a primary lubricating oil cooler 37 is provided, through which the lubricating oil flows and heat is removed therefrom before returning to the lubricating oil tank 25. The primary lubricating oil cooler 37 can comprise an oil/air heat exchanger. Reference number 39 schematically indicates a blower, which generates an airflow for removing heat from the lubricating oil flowing through the primary lubricating oil cooler 37. The primary lubricating oil cooler 37 can also be an oil/water heat exchanger, rather than an oil/air heat exchanger.

In some embodiments, known to the skilled in the art, the gas turbine comprises a variable-geometry hydraulic system 40. This system uses the lubricating oil circulating in the lubricating oil circuit 23 to drive the movement of movable blades of the gas turbine 1, in order to adapt the geometry of the gas turbine to the operating conditions. A high-pressure lubricating oil pump 41 is provided to increase the pressure of the lubricating oil and to feed the pressurized lubricating oil to the actuators of the variable-geometry hydraulic system 40. The lubricating oil returning from the variable-geometry hydraulic system 40 into the lubricating oil pipe 29 has been heated up and the temperature thereof has increased. In some situations a secondary lubricating oil cooler 43 becomes necessary, to remove the excess heat transferred to the lubricating oil when circulating in the variable-geometry hydraulic system 40. This secondary lubricating oil cooler 43 can be an oil/air or an oil/water heat exchanger, for example.

When the gas turbine 1 is shutdown, the scavenger pump 33 is stopped and flowing of the lubricating oil from the collecting duct 31 towards the lubricating oil tank 25 is prevented. This can cause flooding of the bearings of the turbomachinery.

The herein disclosed subject matter relates to gas turbines and methods for operating gas turbines as set forth in the claims.

According to some aspects of this subject matter, the secondary lubricating oil cooler is arranged inside the turbine package. The secondary lubricating oil cooler is arranged within the turbine package so that a portion of a cooling airflow circulating in the turbine package and provided for cooling the gas turbine casing flows through the secondary lubricating oil cooler and removes heat therefrom. The secondary lubricating oil cooler is arranged in a position such that flooding of the gas turbine is prevented in case of shutdown. This is for example achieved by arranging the secondary lubricating oil cooler in a position below the axis of rotation of the gas turbine, i.e. below the gas turbine shaft. In this context, should the gas turbine have more than one shaft, for example two or more coaxial shafts arranged one within the other, as commonly provided for in double-shaft or multiple-shaft aeroderivative gas turbines, the definition "below the gas turbine shaft" should be understood as indicating a location or position below the combination of one or more shafts of the gas turbine. More specifically, below the gas turbine shaft means in a position lower than the shaft(s) and relevant bearings.

In some aspects of this subject matter a gas turbine is provided, comprising a turbine package, wherein at least one compressor, one high pressure turbine and one power turbine are arranged. The gas turbine further comprises a ventilation system for cooling the interior of said turbine package. A lubricating oil circuit is further provided, which comprises at least: a lubricating oil pump, a lubricating oil tank, a primary lubricating oil cooler. In addition to the primary lubricating oil cooler, the lubricating oil circuit further comprises a secondary lubricating oil cooler. The secondary lubricating oil cooler is arranged in the turbine package, in a position lower than the rotary shaft or shafts of said gas turbine. The ventilation system is arranged and designed, so that at least part of a package-cooling airflow contacts said secondary lubricating oil cooler for removing heat from the lubricating oil circulating in said secondary lubricating oil cooler.

In some aspects of this subject matter the lubricating oil circuit comprises a scavenger pump arranged between a lubrication oil sump of the gas turbine sump or any other suitable collecting arrangement for collecting said lubricating oil, and said primary lubricating oil cooler. Between the scavenger pump and the primary lubricating oil cooler additional components can be provided. For example a non-return valve, i.e. a check valve can be arranged between the scavenger pump and the primary lubricating oil cooler. In some embodiments the primary lubricating oil cooler is arranged upstream of the lubricating oil tank. However, in other embodiments the primary lubricating oil cooler can be positioned downstream the lubricating oil tank. In such arrangement, the lubricating oil tank would be arranged between the scavenger pump and the primary lubricating oil cooler.

In some embodiments of this subject matter a combustion-air intake plenum in fluid communication with the compressor or compressors of the gas turbine can be provided. The combustion-air intake plenum is advantageously arranged in the turbine package, between a main package compartment, where the gas turbine is arranged, and a cooling air intake compartment. Lateral airflow passages may be formed between side walls of the turbine package and the combustion-air intake plenum. In some embodiments, at least one bottom airflow passage is formed between the combustion-air intake plenum and a bottom wall of said turbine package. Additionally, in some embodiments of this subject matter the secondary lubricating oil cooler is arranged across an airflow channeling, in fluid communication with the bottom airflow passage extending underneath the combustion-air intake plenum.

In some embodiments of this subject matter, the secondary lubricating oil cooler is arranged underneath an air-pervious bottom panel of a cooling air inlet compartment. The secondary lubricating oil cooler has a lubricating oil outlet which is, directly or indirectly, in fluid communication with bearings of said gas turbine.

The gas turbine includes a variable-geometry hydraulic system forming part of the lubricating oil circuit. According to a further aspect, the present disclosure also concerns a method of operating a gas turbine comprising the steps of:

Providing a turbine package and a gas turbine arranged in said turbine package; generating a package-cooling airflow;
separating a portion of said package-cooling airflow and circulating said portion of said package-cooling airflow through a secondary lubricating oil cooler, arranged within the turbine package, thus removing heat from lubricating oil circulating in said secondary lubricating oil cooler;
circulating said package-cooling airflow through said turbine package to remove heat from the gas turbine casing.

In addition to the secondary lubricating oil cooler, also the flow connection between the secondary lubricating oil cooler and the bearings of the gas turbine are preferably arranged within the turbine package, making the design more compact and more reliable by preventing dispersion of lubricating oil from the lubricating oil circuit in the environment.

The arrangement of the secondary lubricating oil cooler under the position of the axis of the gas turbine prevents flooding of the machine in case of shutdown and stoppage of the scavenger pump. The scavenger pump will obstruct the flow of lubricating oil towards the lubricating oil tank. However, since the secondary lubricating oil cooler is in a position lower than the bearings, which are located around the axis of the gas turbine, the lubricating oil contained in the secondary lubricating oil cooler will not flood the bearings and the turbomachine.

Features and embodiments of this subject matter are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the scope of the present invention.

A more complete appreciation of the disclosed embodiments of the invention and many of the attendant advantages thereof will be readily obtained as the same becomes better understood by reference to the following detailed description when considered in connection with the accompanying drawings, wherein

Fig.1 schematically illustrates a gas turbine and lubricating oil circuit according to the state of the art;

Fig.2 illustrates a side view of a gas turbine package;

Fig.3 illustrates a schematic diagram of a gas turbine embodying the subject matter disclosed herein;

Fig.4 illustrates a perspective and partial sectional view of a gas turbine package and relevant turbomachinery housed therein; and

Fig.5 illustrates a schematic of the hydraulic circuit of the lubricating oil according to the present disclosure.

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

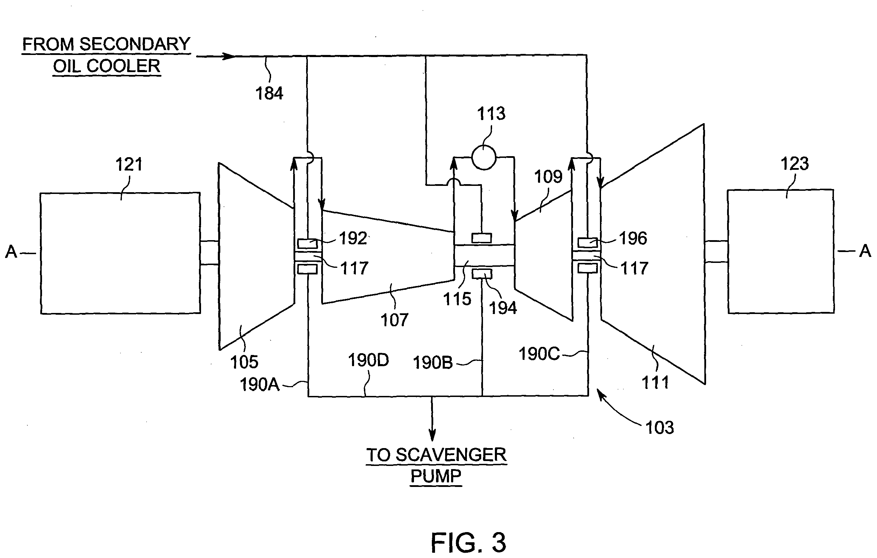

In the enclosed drawings, the package layout of a gas turbine is labelled 100 as a whole. The layout includes a gas turbine package 101, below named also simply package or turbine package, in which a gas turbine 103 is housed. In some embodiments the gas turbine 103 can be a dual-shaft aeroderivative gas turbine, such as, for example, an LM6000 aeroderivative gas turbine, commercially available from GE Aviation, Evendale, Ohio, USA. Other aeroderivative gas turbines can be used. The structure of the gas turbine 103 is illustrated schematically in Fig. 3. The gas turbine 103 comprises a low pressure compressor 105, a high pressure compressor 107, a high pressure turbine 109 and a power turbine, i.e. a low pressure turbine 111. Ambient air is compressed at a first pressure value by low pressure compressor 105 and further compressed by the high pressure compressor 107. The compressed air is mixed with fuel and the air-fuel mixture is burned in a combustor 113 for generating high pressure, high temperature combustion gases, which are expanded sequentially in the high pressure turbine 109 and in the power turbine 111. A first shaft 115 supports the rotor of the high pressure compressor 107 and the rotor of the high pressure turbine 109. A second shaft 117 extends coaxially to the first shaft 115. The second shaft 117 connects mechanically the rotor of the low pressure compressor 105 and the rotor of the power turbine 111.

121 and 123 represent the cold end drive and the hot end drive of the gas turbine 103, respectively. A load can be connected to either the cold end drive 121 or to the hot end drive 123 or both. In the exemplary embodiment of Fig. 2, a load 125 is connected to the hot end drive of the gas turbine 103.

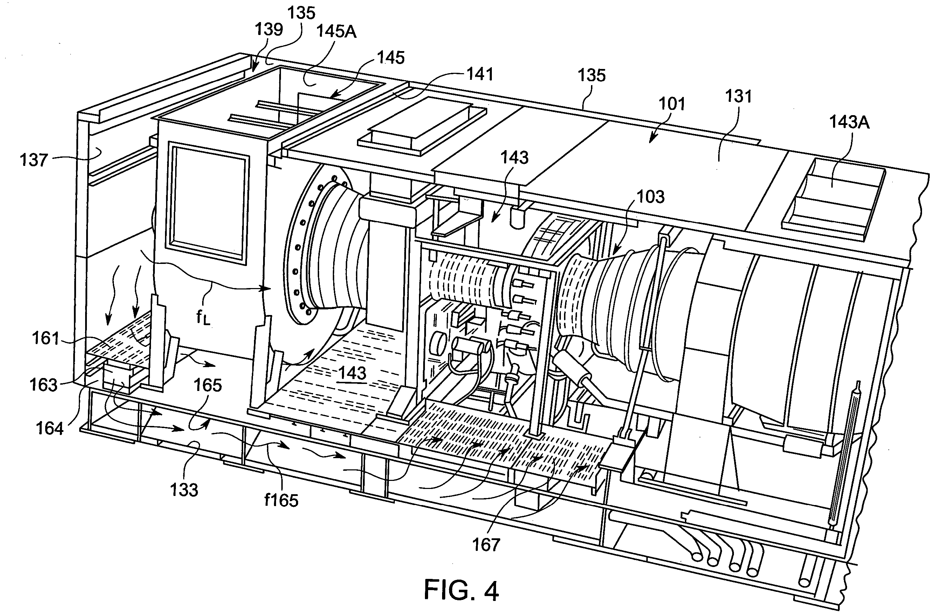

The gas turbine 103 is housed in the package 101 as shown in Fig.4. The package 101 may include a top wall 131, a bottom wall 133, side walls 135 and end walls 137.

In some embodiments the turbine package 101 comprises a first compartment 139, and a second compartment 143, wherein the actual gas turbine 103 is housed. The second compartment 143 is provided with an air escape aperture 143A from which the cooling air exits the turbine package 101.

In the first compartment 139 a combustion-air intake plenum 145 is arranged. The combustion-air intake plenum 145 comprises an inlet aperture 145A in fluid communication with an air intake line 147 (Fig.2). Air is aspirated through the air intake line 147 by the suction effect of the serially arranged low pressure compressor 105 and high pressure compressor 107.

The first compartment 139 forms part of a ventilation system for the circulation of cooling air in the second compartment 143, where the gas turbine 103 is housed. The first compartment 139 is in fluid communication with a cooling air intake line 149, in which a blower 151 can be arranged. Air entering the cooling air intake line 149 circulates through the first compartment 139 and enters the second compartment 143 partly escaping along lateral airflow passages represented by arrows fL and formed between the side walls 135 of the turbine package 101 and the combustion-air intake plenum 145. A fraction or portion of the air entering the cooling air intake line 149 flows through a bottom panel 161 provided in an airflow channelling located in the lower part of the first compartment 139. The bottom panel 161 is arranged in a position below the position of the rotary axis A-A of the gas turbine 103, and therefore in a position lower than the shafts 115 and 117 of the gas turbine 103 and the relevant bearings.

In some embodiments the bottom panel 161 can be formed as a grid, or as a solid panel provided with apertures, or the like. Cooling air is allowed to flow through the bottom panel 161 and through a secondary lubricating oil cooler 163 arranged underneath the bottom panel 161 across an airflow channelling 164, which establishes a flow connection between the first compartment 139 and a bottom airflow passage 165 extending at least partly underneath the second compartment 143. The cooling air flowing through the secondary lubricating oil cooler 163 removes heat from the lubricating oil circulating in the secondary lubricating oil cooler and further flows through the bottom airflow passage 165 (see arrows f165) towards and into the second compartment 143 of the turbine package 101, wherein the gas turbine 103 is arranged. In some embodiments, the bottom airflow passage 165 is provided, underneath the central portion of the second compartment 143, with an apertured top panel 167, through which the cooling airflow can escape the bottom airflow passage 165 and enter the second compartment 143.

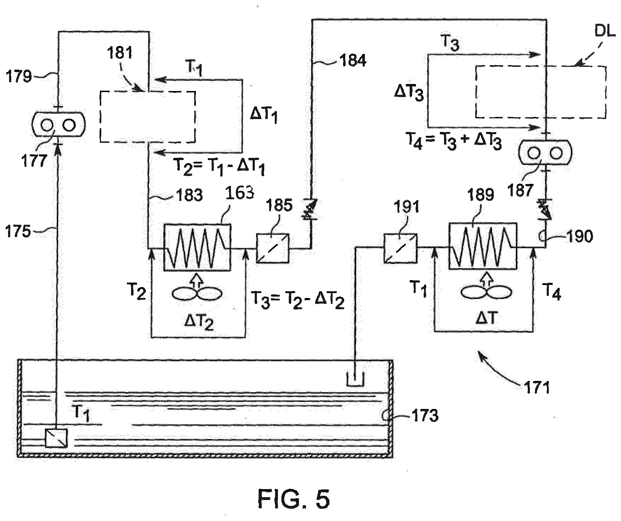

The secondary lubricating oil cooler 163 forms part of a lubricating oil circuit, which is schematically represented in Fig. 5. In this figure the lubricating oil circuit is labelled 171 as a whole. The secondary lubricating oil cooler is again labelled 163.

In the exemplary embodiment illustrated in Fig. 5 the lubricating oil circuit 171 further comprises a lubricating oil tank 173, wherefrom lubricating oil is drawn along a pipe 175 by a lubricating oil pump 177. The lubricating oil pumped by the lubricating oil pump 177 is delivered through a pipe 179 to a variable-geometry hydraulic system globally designated 181. As known to those skilled in the art, at least a fraction of the lubricating oil circulating in pipe 179 can be pumped into the variable-geometry hydraulic system 181 and is returned in the main lubricating oil circuit through a pipe 183. The latter is in fluid communication with the secondary lubricating oil cooler 163. The cooled lubricating oil exiting the secondary oil cooler 163 is delivered to the components of the gas turbine requiring lubrication and/or cooling, such as the bearings of the shafts 115, 117. These elements are not shown in detail in the diagram of Fig. 5, but are located in the area represented by the dashed line DL in Fig. 5. A delivery filter 185 can be arranged downwards the secondary lubricating oil cooler 163, as shown in the exemplary schematic hydraulic circuit of Fig.5.

The lubricating oil exiting the bearings is collected, e.g. through a sump, by a scavenger pump 187, which delivers the collected lubricating oil through a primary lubricating oil cooler 189. A lubricating oil pipe 190 connects the scavenger pump 187 to the primary lubricating oil cooler 189. In some embodiments a scavenger filter 191 can be provided along lubricating oil piping, e. g. between the outlet side of the primary lubricating oil cooler 189 and the lubricating oil tank 173, in which the lubricating oil is collected.

The arrangement of the various components of the lubricating oil circuit can be different from the one shown in the drawings. For example, the primary lubricating oil cooler 189 can be arranged along the pipe 175, i.e. downstream of the lubricating oil tank 173.

In the diagram of Fig. 5 the temperature of the lubricating oil in various points along the circuit 171 is indicated. T1 designates the temperature of the lubricating oil in the lubricating oil tank 173. The lubricating oil is substantially at the same temperature T1 at the inlet of the variable-geometry hydraulic system 181. After flowing through the variable-geometry hydraulic system 181, the temperature of the lubricating oil has increased from T1 to T2, wherein

$$T2 = T1 + \Delta T_1 \, °C.$$

The temperature T2 is usually higher than the admissible temperature in the bearings of the gas turbine, and therefore heat is removed from the lubricating oil in the secondary lubricating oil cooler 163. T3 is the temperature at the exit side of the secondary lubricating oil cooler 163, wherein

$$T3 = T2 - \Delta T_2 \, °C$$

The lubricating oil enters the bearings of the gas turbine 103 at temperature T3 and, following heat removal during circulation in the bearings, the lubricating oil exiting the gas turbine 103 has a temperature T4 which is usually approximately 60 °C higher than T3, i.e.:

$$T4 = T3 + \Delta T_3 \, °C = T3 + 60 \, °C.$$

By flowing through the primary lubricating oil cooler 189, the lubricating oil is cooled down from temperature T4 to temperature T1, for example:

$$T1 = T4 - 60\ °C.$$

In the schematic representation of Fig. 3 a lubricating oil distributing pipe 184 is shown, from which lubricating oil is delivered to the bearings of the gas turbine 103. These bearings are schematically represented at 192, 194, 196. The lubricating oil exiting the bearings 192, 194, 196 is collected by pipes 190A, 190B, 190C and therefrom in a collector pipe, or turbine sump 190D for delivery to the scavenger pump 187.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions.

**Claims**

1. A gas turbine comprising:

    a turbine package (101);
    a gas turbine (103) arranged in said turbine package;
    a ventilation system for cooling the interior of said turbine package (101);
    a lubricating oil circuit (171), comprising at least: a lubricating oil pump (177), a lubricating oil tank (173) and a primary lubricating oil cooler (189);

    **characterized in that** the lubricating oil circuit (171) further comprises a variable-geometry hydraulic system (181) and a secondary lubricating oil cooler (163) arranged in said turbine package, in a position lower than the bearings (192, 194, 196) which are located around a rotary shaft (115, 117) of the gas turbine, wherein at least a fraction of the lubricating oil is pumped into the variable-geometry hydraulic system (181) and returned to the main lubricating oil circuit through a pipe (183) in fluid communication with the secondary lubricating oil cooler (163) so that cooled lubricating oil exiting the secondary oil cooler (163) is delivered to the components of the gas turbine requiring lubrication and/or cooling, and wherein said ventilation system is arranged and designed such that at least part of a cooling airflow circulating in said turbine package contacts said secondary lubricating oil cooler (163) for removing heat from the lubricating oil circulating therein.

2. The gas turbine according to claim 1, wherein said lubricating oil circuit (171) comprises a scavenger pump arranged upstream of said primary lubricating oil cooler (189).

3. The gas turbine according to claim 2, wherein said scavenger pump is arranged between the primary lubricating oil cooler (189) and the bearings (192, 194, 196) which are located around a rotary shaft (115, 117) of said gas turbine.

4. The gas turbine according to claim 1 or 2 or 3, comprising a combustion-air intake plenum (145) in fluid communication with a compressor; wherein lateral airflow passages are formed between side walls of said turbine package (101) and said combustion-air intake plenum (145), and at least one bottom airflow passage extends between said combustion-air intake plenum (145) and a bottom wall of said turbine package (101); and wherein said secondary lubricating oil cooler (163) is arranged across an airflow channeling, in fluid communication with said bottom airflow passage.

5. The gas turbine according to one or more of the preceding claims, wherein said secondary lubricating oil cooler (163) is arranged underneath an air-pervious bottom panel of a cooling air inlet compartment.

6. The gas turbine according to one or more of the preceding claims, wherein said secondary lubricating oil cooler (163) has a lubricating oil outlet in fluid communication with bearings of said gas turbine.

7. A method of operating a gas turbine provided with a turbine package (101) having a ventilation system for cooling the interior of said turbine package, said gas turbine comprising a lubricating oil circuit comprised of at least a primary lubricating oil cooler (189); said method comprising the steps of:

    generating a package cooling airflow; and circulating said package cooling airflow through said turbine package.

    **characterized in that** lubricating oil circuit further comprises a variable-geometry hydraulic system (181) and a secondary lubricating oil cooler (163), wherein said secondary lubricating oil cooler is arranged in said turbine package, in a position lower than the bearings (192, 194, 196) which are located around a rotary shaft (115, 117) of the gas turbine, wherein the method further comprises that at least a fraction of the lubricating oil is pumped into the variable-geometry hydraulic system (181) and returned to the main lubricating oil circuit through a pipe (183) in fluid communication with the secondary lubricating oil cooler (163) so that cooled lubricating oil exiting the secondary oil cooler (163) is delivered to the components of the gas turbine requiring lubrication and/or cooling, and further comprises circulating at least a portion of said package cooling airflow through said secondary lubricating oil cooler (163), removing heat from lubricating oil which circulates in said secondary lubricating oil cooler.

**Patentansprüche**

1. Gasturbine, umfassend:

   ein Turbinengehäuse (101);
   eine Gasturbine (103), die in dem Turbinengehäuse angeordnet ist;
   ein Belüftungssystem zur Kühlung des Inneren des Turbinengehäuses (101);
   einen Schmierölkreislauf (171), der mindestens Folgendes umfasst: eine Schmierölpumpe (177), einen Schmieröltank (173) und einen primären Schmierölkühler (189);
   **dadurch gekennzeichnet, dass** der Schmierölkreislauf (171) weiter ein hydraulisches System (181) mit variabler Geometrie und einen sekundären Schmierölkühler (163) umfasst, der in dem Turbinengehäuse, in einer Position niedriger als die Lager (192, 194, 196), welche sich um eine Drehwelle (115, 117) der Gasturbine befinden, angeordnet ist, wobei mindestens ein Bruchteil des Schmieröls in das hydraulische System (181) mit variabler Geometrie gepumpt und durch ein Rohr (183) in Fluidverbindung mit dem sekundären Schmierölkühler (163) zum Hauptschmierölkreislauf zurückgeführt wird, sodass gekühltes Schmieröl, das den sekundären Ölkühler (163) verlässt, an die Komponenten der Gasturbine abgegeben wird, die eine Schmierung und/oder Kühlung erfordern, und wobei das Belüftungssystem so angeordnet und gestaltet ist, dass mindestens ein Teil eines Kühlluftstroms, der in dem Turbinengehäuse zirkuliert, den sekundären Schmierölkühler (163) berührt, um Wärme aus dem darin zirkulierenden Schmieröl abzuführen.

2. Gasturbine nach Anspruch 1, wobei der Schmierölkreislauf (171) eine stromaufwärts des primären Schmierölkühlers (189) angeordnete Rückförderpumpe umfasst.

3. Gasturbine nach Anspruch 2, wobei die Rückförderpumpe zwischen dem primären Schmierölkühler (189) und den Lagern (192, 194, 196) angeordnet ist, die sich um eine Drehwelle (115, 117) der Gasturbine befinden.

4. Gasturbine nach Anspruch 1 oder 2 oder 3, umfassend einen Verbrennungslufteinlasssammler (145) in Fluidverbindung mit einem Kompressor; wobei seitliche Luftstromkanäle zwischen den Seitenwänden des Turbinengehäuses (101) und des Verbrennungslufteinlasssammlers (145) ausgebildet sind, und sich mindestens ein Bodenluftstromkanal zwischen dem Verbrennungslufteinlasssammler (145) und einer Bodenwand des Turbinengehäuses (101) erstreckt; und wobei der sekundäre Schmierölkühler (163) über einem Luftstromkanal angeordnet ist, der in Fluidverbindung mit dem Bodenluftstromkanal steht.

5. Gasturbine nach einem oder mehreren der vorstehenden Ansprüche, wobei der sekundäre Schmierölkühler (163) unterhalb einer luftdurchlässigen Bodenplatte eines Kühllufteinlassraums angeordnet ist.

6. Gasturbine nach einem oder mehreren der vorstehenden Ansprüche, wobei der sekundäre Schmierölkühler (163) einen Schmierölauslass aufweist, der in Fluidverbindung mit Lagern der Gasturbine steht.

7. Verfahren zum Betreiben einer Gasturbine, die mit einem Turbinengehäuse (101) versehen ist, das ein Belüftungssystem zur Kühlung des Inneren des Turbinengehäuses aufweist, wobei die Gasturbine einen Schmierölkreislauf umfasst, der mindestens einen primären Schmierölkühler (189) umfasst; wobei das Verfahren die folgenden Schritte umfasst:

   Erzeugen eines Gehäusekühlluftstroms; und Zirkulieren des Gehäusekühlluftstroms durch das Turbinengehäuse.
   **dadurch gekennzeichnet, dass** der Schmierölkreislauf weiter ein hydraulisches System (181) mit variabler Geometrie und einen sekundären Schmierölkühler (163) umfasst, wobei der sekundäre Schmierölkühler in dem Turbinengehäuse in einer Position angeordnet ist, die niedriger ist als die Lager (192, 194, 196), welche sich um eine Drehwelle (115, 117) der Gasturbine befinden, wobei das Verfahren weiter umfasst, dass mindestens ein Bruchteil des Schmieröls in das hydraulische System (181) mit variabler Geometrie gepumpt und durch ein Rohr (183) in Fluidverbindung mit dem sekundären Schmierölkühler (163) zum Hauptschmierölkreislauf zurückgeführt wird, sodass gekühltes Schmieröl, das den sekundären Ölkühler (163) verlässt, an die Komponenten der Gasturbine abgegeben wird, die eine Schmierung und/oder Kühlung erfordern, und weiter das Zirkulieren von mindestens einem Teil des Kühlluftstroms des Gehäuses durch den sekundären Schmierölkühler (163) umfasst, wobei Wärme aus dem Schmieröl abgeführt wird, welches in dem sekundären Schmierölkühler zirkuliert.

## Revendications

1. Turbine à gaz comprenant :

   un carter de turbine (101) ;
   une turbine à gaz (103) agencée dans ledit carter de turbine ;
   un système de ventilation pour le refroidissement de l'intérieur dudit carter de turbine (101) ;
   un circuit d'huile de lubrification (171), comprenant au moins : une pompe d'huile de lubrification (177), un réservoir d'huile de lubrification (173) et un refroidisseur d'huile de lubrification primaire (189) ;
   **caractérisée en ce que** le circuit d'huile de lubrification (171) comprend en outre un système hydraulique à géométrie variable (181) et un refroidisseur d'huile de lubrification secondaire (163) agencé dans ledit carter de turbine, dans une position inférieure aux paliers (192, 194, 196) qui sont situés autour d'un arbre rotatif (115, 117) de la turbine à gaz, dans laquelle au moins une fraction de l'huile de lubrification est pompée dans le système hydraulique à géométrie variable (181) et retournée au circuit d'huile de lubrification principal au travers d'un tuyau (183) en communication fluidique avec le refroidisseur d'huile de lubrification secondaire (163) de sorte que de l'huile de lubrification refroidie sortant du refroidisseur d'huile secondaire (163) soit fournie aux composants de la turbine à gaz requérant la lubrification et/ou le refroidissement, et dans laquelle ledit système de ventilation est agencé et conçu de sorte qu'au moins une partie d'un flux d'air de refroidissement circulant dans ledit carter de turbine touche ledit refroidisseur d'huile de lubrification secondaire (163) pour retirer la chaleur de l'huile de lubrification circulant dedans.

2. Turbine à gaz selon la revendication 1, dans laquelle ledit circuit d'huile de lubrification (171) comprend une pompe de retour d'huile agencée en amont dudit refroidisseur d'huile de lubrification primaire (189).

3. Turbine à gaz selon la revendication 2, dans laquelle ladite pompe de retour d'huile est agencée entre le refroidisseur d'huile de lubrification primaire (189) et les paliers (192, 194, 196) qui sont situés autour d'un arbre rotatif (115, 117) de ladite turbine à gaz.

4. Turbine à gaz selon la revendication 1 ou 2 ou 3, comprenant un plénum d'admission d'air de combustion (145) en communication fluidique avec un compresseur ; dans lequel des passages de flux d'air latéraux sont formés entre des parois latérales dudit carter de turbine (101) et ledit plénum d'admission d'air de combustion (145), et au moins un passage de flux d'air inférieur s'étend entre ledit plénum d'admission d'air de combustion (145) et une paroi inférieure dudit carter de turbine (101) ; et dans laquelle ledit refroidisseur d'huile de lubrification secondaire (163) est agencé sur une canalisation de flux d'air, en communication fluidique avec ledit passage de flux d'air inférieur.

5. Turbine à gaz selon l'une ou plusieurs des revendications précédentes, dans laquelle ledit refroidisseur d'huile de lubrification secondaire (163) est agencé sous un panneau inférieur perméable à l'air d'un compartiment d'entrée d'air de refroidissement.

6. Turbine à gaz selon l'une ou plusieurs des revendications précédentes, dans laquelle ledit refroidisseur d'huile de lubrification secondaire (163) présente une sortie d'huile de lubrification en communication fluidique avec des paliers de ladite turbine à gaz.

7. Procédé de fonctionnement d'une turbine à gaz dotée d'un carter de turbine (101) présentant un système de ventilation pour le refroidissement de l'intérieur dudit carter de turbine, ladite turbine à gaz comprenant un circuit d'huile de lubrification constitué d'au moins un refroidisseur d'huile de lubrification primaire (189) ; ledit procédé comprenant les étapes de :

   la génération d'un flux d'air de refroidissement de carter ; et
   la circulation dudit flux d'air de refroidissement de carter au travers dudit carter de turbine.
   **caractérisé en ce que** le circuit d'huile de lubrification comprend en outre un système hydraulique à géométrie variable (181) et un refroidisseur d'huile de lubrification secondaire (163), dans lequel ledit refroidisseur d'huile de lubrification secondaire est agencé dans ledit carter de turbine, dans une position inférieure aux paliers (192, 194, 196) qui sont situés autour d'un arbre rotatif (115, 117) de la turbine à gaz, dans lequel le procédé comprend en outre qu'au moins une fraction de l'huile de lubrification soit pompée dans le système hydraulique à géométrie variable (181) et retournée au circuit d'huile de lubrification principal au travers d'un tuyau (183) en communication fluidique avec le refroidisseur d'huile de lubrification secondaire (163) de sorte que de l'huile de lubrification refroidie sortant du refroidisseur d'huile secondaire (163) soit fournie aux composants de la turbine à gaz requérant la lubrification et/ou le refroidissement, et comprend en outre la circulation d'au moins une portion dudit flux d'air de refroidissement de carter au travers dudit refroidisseur d'huile de lubrification secondaire (163), le retrait de la chaleur de l'huile de lubrification qui circule dans ledit refroidisseur d'huile de lubrification secondaire.

STATE OF THE ART

FIG. 1

FIG. 2

FROM SECONDARY
OIL COOLER

184

113

121

123

A —

192

117

109

196

117

105

190A

107

115

194

190C

111

190D

190B

103

TO SCAVENGER
PUMP

FIG. 3

EP 2 823 169 B1

FIG. 4

EP 2 823 169 B1

FIG. 5

**EP 2 823 169 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3418485 A